# EUROPÄISCHE PATENTSCHRIFT

(11) **EP 2 031 722 B1**
(45) Veröffentlichungstag und Bekanntmachung des Hinweises auf die Patenterteilung: **23.12.2009**
(21) Anmeldenummer: 08012434.0
(22) Anmeldetag: 10.07.2008
(51) Int. Cl.: H02G 3/18

(54) **Klappdeckelvorrichtung für nass gepflegte Böden**
Flip lid device for wet-maintained floors
Dispositif de couvercle rabattable pour sols soignés de manière humide

(30) Priorität: 08.08.2007 DE 102007037471; 08.08.2007 DE 202007011051 U
(43) Veröffentlichungstag der Anmeldung: 04.03.2009
(73) Patentinhaber: Electraplan Solutions GmbH, 22869 Schenefeld (DE)
(72) Erfinder: Limbach, Frank, 53560 Vettelschoss (DE)
(74) Vertreter: Patentanwälte Buse, Mentzel, Ludewig

(56) Entgegenhaltungen:
- EP-A- 0 743 733
- DE-U1- 7 612 996
- DE-U1- 20 206 924
- GB-A- 2 241 389
- US-A1- 2008 053 679

## Beschreibung

Die Erfindung betrifft eine Klappdeckelvorrichtung für nass gepflegte Böden, welche aus einem Gerätebecherträger, einem verschließbaren Leitungsauslass und einem am Gerätebecherträger gelagerten Deckel aufgebaut ist.

Aus dem europäischen Patent EP 0648000 B1 ist eine gattungsgemäße Klappdeckelvorrichtung bekannt. Der Deckel ist schwenkbar am Gerätebecherträger angeordnet. Unterhalb des Deckels, zwischen Deckel und dem Gerätebecherträger, ist eine Dichtung vorgesehen, die die im Innenraum des Gerätebecherträgers in Gerätebechern angeordneten Anschlüsse vor eindringender Feuchtigkeit schützt. Nachteilig bei dieser Anordnung ist, dass für die Dichtungswirkung der Deckel gegen den Gerätebecherträger gedrückt gehalten werden muss. Hierzu ist ein zusätzlicher Verriegelungsmechanismus notwendig. Ein weiterer Nachteil dieser Vorrichtung besteht darin, dass aufgrund der Anordnung der Dichtung unterhalb des Deckels Schwallwasser bis zur Dichtung eindringen kann. Dieses Schwallwasser kann sich im Spalt zwischen Deckel und Gerätebecherträger sammeln und bei Öffnen des Deckels in den Gerätebecherträger eindringen, was nicht erwünscht ist.

Eine bessere Abdichtung zeigen Vorrichtungen gemäß der Schrift GB 2067026 A oder dem Dokument EP 1357653 A1. Hier werden Gerätebecherträger mit einem aufgesetzten Deckel verschlossen. Dieser Deckel ist aus einer kreisförmigen Grundplatte und einem an den Umfang der Grundplatte angesetzten Rand aufgebaut. Zwischen dem Rand des Deckels und einem parallel verlaufenden Seitenrand des Gerätebecherträgers ist eine Dichtung vorgesehen. Das Abdichten des Gerätebecherträgers erfolgt durch einfaches Aufsetzen des Deckels. Es ist demzufolge keine Verriegelung erforderlich. Auch wird der Anteil an eindringendem Schwallwasser zwischen Deckel und Gerätebecherträger, welches sich oberhalb der Dichtung sammeln kann, reduziert. Darüber hinaus kann das wenige eindringende Schwallwasser bei Anordnung der Dichtung im Bereich des Deckels beim Herausziehen des Deckels durch die Dichtung aus dem Bereich des Gerätebecherträgers herausgebracht werden. Nachteilig bei den vorgenannten Vorrichtungen ist, dass bei einem Deckel aus Grundplatte und abstehendem Rand der für Bodendosen bevorzugte Klappdeckelmechanismus nicht realisierbar ist.

Aufgabe der Erfindung ist es, eine Klappdeckelvorrichtung für nass gepflegte Böden zur Verfügung zu stellen, die einfach aufgebaut ist und trotzdem ein Eindringen von Feuchtigkeit in den Gerätebecherträger sowohl bei geschlossenem Deckel als auch beim Öffnen des Deckels verhindert.

Diese Aufgabe wird mit einer Klappdeckelvorrichtung mit den Merkmalen des Anspruchs 1 erfüllt. Diese Klappdeckelvorrichtung besitzt einen am Gerätebecherträger gelagerten Deckel. In diesem Deckel befindet sich eine Einbauöffnung für einen verschließbaren und ebenfalls abgedichteten Leitungsauslass. Der Deckel selbst ist aus einer Metallplatte aufgebaut, an deren Umfangsrand ein Dichtungselement vorgesehen ist, vorzugsweise in einer Nut am äußeren Rand der Metallplatte. In geöffneter Position des Deckels überragt das in der Nut angeordnete Dichtungselement den Umfang der Deckelfläche des Deckels. In geschlossener Position des Deckels verhindert dieses Dichtungselement das Eindringen von Feuchtigkeit in den Innenraum des Gerätebecherträgers durch Abdichtung des Zwischenraumes zwischen Deckelrand und der Innenseite des Gerätebecherträgers, da das Dichtungselement an der Innenseite des Gerätebecherträgers zur Anlage kommt.

Im Gegensatz zum Stand der Technik ist der Deckel bewegbar am Gerätebecherträger angeordnet. Hierfür ist ein Mehrgelenkscharnier vorgesehen. Mittels dieses Mehrgelenkscharniers kann der Deckel aus der geschlossenen in die geöffnete Position bewegt werden. Diese Bewegung erfolgt in zwei nachfolgenden Bewegungsschritten, nämlich erstens in einer senkrechten Hubbewegung des Deckels, hierbei erfolgt die Bewegung um eine erste Drehachse des Mehrgelenkscharniers. Nach Beendigung dieses Hubes befindet sich der Deckel außerhalb, d.h. oberhalb des Gerätebecherträgers. Das Dichtungselement hat während dieses Hubes eventuell vorhandene Flüssigkeit, die sich oberhalb des Dichtungselementes im Spalt zwischen Deckel und Gerätebecherträger gesammelt hat, aus dem Gerätebecherträger ausgetragen. Anschließend erfolgt eine Schwenkbewegung des Deckels um eine zweite Drehachse des Mehrgelenkscharniers. Der Deckel gibt damit den Innenraum des Gerätebecherträgers frei und es ist möglich entsprechende Anschlüsse oder Verbindungen mit Anschlüssen innerhalb des Gerätebecherträgers vorzunehmen.

Das Mehrgelenkscharnier wird vorzugsweise an der Unterseite des Deckels vorgesehen und damit im nicht sichtbaren Bereich der Klappdeckelvorrichtung. Dies hat den zusätzlichen Vorteil, dass das einheitliche optische Erscheinungsbild des Deckels und der Klappdeckelvorrichtung nicht gestört wird. Das optische Erscheinungsbild kann durch ein besonderes Design zusätzlich verbessert werden, welches aus einer entsprechenden Musterung der Metallplatte bestehen kann oder durch ein zusätzliches Aufbringen von gewünschten Belegen auf der Metallplatte erzielt wird, beispielsweise von dessinierten Blechen oder von Bodenbelägen, insbesondere von Bodenbelägen, die vergleichbar zu den Bodenbelägen in Nachbarschaft der Klappdeckelvorrichtung sind.

Bei einer vorteilhaften Ausgestaltung der Klappdeckelvorrichtung besteht das Mehrgelenkscharnier aus einem an der Unterseite des Deckels angebrachten Scharnierteil und einem weiteren Scharnierteil, dass an der Innenseite des Rahmens festgelegt ist sowie aus einem zwischen diesen beiden Scharnierteilen angeordneten weiteren Scharnierelement, dass diese beiden Scharnierteile miteinander verbindet und zwar so, dass sich die beiden Scharnierteile um zwei Drehachsen bewegen können. Bei einer bevorzugten Ausführungsform wird jeweils eine Scharnierplatte mit einem angeformten Scharnierauge als Scharnierteil an der Unterseite der Metallplatte und an der Innenseite des Rahmens festgelegt. Das mittlere Scharnierelement besitzt zwei Scharnieraugen und zwar an seinen gegenüberliegenden Enden je ein Scharnierauge, wobei eins dieser Scharnieraugen über einen Scharnierstift mit dem Scharnierauge des Scharnierteils verbunden ist, welches an der Metallplatte festgelegt ist. Dieser Scharnierstift bildet die erste Drehachse und das weitere Scharnierauge des mittleren Scharnierelementes ist über einen gemeinsamen Scharnierstift mit dem Scharnierauge des Scharnierteiles verbunden, welches an der Innenseite des Rahmens festgelegt ist. Dieser Scharnierstift bildet dann die zweite Drehachse des Mehrgelenkscharniers. Die erste Drehachse ist, wie oben bereits erläutert, notwendig für den Hub des Deckels aus den Gerätebecherträger und die zweite Drehachse bewirkt die Schwenkbewegung des Deckels. Das mittlere Scharnierelement mit den zwei an den gegenüberliegenden Enden angeordneten Scharnieraugen bestimmt durch den Abstand der Scharnieraugen den maximalen Hub des Deckels. Der Hub des Deckels und damit der Abstand der Scharnieraugen muss zumindest so groß bemessen sein, dass beim Hub die Metallplatte in einen Bereich außerhalb des Gerätebecherträgers bewegbar ist und damit das Dichtungselement entlang des Innenrahmens des Gerätebecherträgers Flüssigkeit nach außen, außerhalb des Gerätebecherträgers, mitnehmen kann. In diesem Zusammenhang ist darauf hinzuweisen, dass aufgrund der Gestaltung des deckels aus einer Platte, insbesondere einer dünnen Metallplatte nur ein geringer Hub notwendig ist und sich in diesem Fall auch nur geringste Mengen an Schwallwasser im Spalt zwischen dem Rahmen des Gerätebecherträgers und dem Deckel ansammeln können. Es ist jedoch gesichert, dass auch diese geringsten Mengen beim Öffnen des Deckels aus dem Bereich des Gerätebecherträgers ausgetragen werden, anders als bei Klappmechanismen von Klappdeckelvorrichtungen aus dem Stand der Technik.

Das Dichtungselement hat damit zwei Funktionen, zum einen durch seine Anordnung zwischen Deckel und Innenseite des Gerätebecherträgers das Abdichten des Spaltes zwischen diesen beiden Bauteilen und damit die Verhinderung des Eindringens von Wasser beim nassen Pflegen der Böden. Andererseits wird durch die Anordnung des Dichtungselementes am äußeren Rand der Metallplatte und damit bei der Bewegung des Dichtungselementes zusammen mit dem Hub der Metallplatte sichergestellt, dass eventuell angesammelte Feuchtigkeitströpfchen im Spalt oberhalb der Dichtung zwischen Gerätebecherträger und Deckel beim Hub ausgetragen werden.

Die Befestigung des Dichtungselementes am äußeren Rand der Metallplatte kann formschlüssig und/oder kraftschlüssig erfolgen, beispielsweise durch ein Ankleben eines Dichtungselementes am äußeren Rand der Metallplatte, durch Verklemmen eines Dichtungselementes innerhalb einer Nut der Metallplatte, wobei diese Nut in Richtung der Innenseite des Gerätebecherträgers geöffnet ist. In dieser Nut kann das Dichtungselement allein durch Federkraft gehalten werden oder bei entsprechender Ausgestaltung der Nut durch Klemmwirkung. Als Material für ein solches Dichtungselement eignen sich insbesondere elastische Werkstoffe, die um ihre Funktion als Dichtung einerseits und ein leichtes Öffnen des Deckels andererseits erfüllen zu können, vorzugsweise eine Shorehärte zwischen 10 und 40 aufweisen. Besonders bevorzugt sind elastische Kunststoffe mit einer Shorehärte von 30.

Der Deckel und damit auch die Metallplatte der Klappdeckelvorrichtung weisen in der Regel, wie bei Stand der Technik, eine runde Form auf. Eckige Formen sind jedoch nicht ausgeschlossen.

Die vorliegende Klappdeckelvorrichtung für nass gepflegte Böden besitzt damit den Vorteil, dass sie, wie bekannte Klappdeckelvorrichtungen für trockene Böden, den vorteilhaften Klappmechanismus besitzt und trotz dieses Klappmechanismus eine sichere Abdichtung des Innenraumes des Gerätebecherträgers vor eindringender Feuchtigkeit garantiert. Diese Klappdeckelvorrichtung ist einfach ausgestaltet. Der Deckel besteht aus einer Metallplatte, die bedarfsweise mit gewünschten Belägen versehen sein kann und damit in unterschiedlichen Erscheinungsvarianten ausgestaltet werden kann. Durch das Vorsehen eines Leitungsauslasses, der ebenfalls dicht sein muss, hierzu sind verschiedene Leitungsauslassvarianten aus dem Stand der Technik bekannt, werden die Vorzüge dieser bekannten Leitungsauslassvarianten, nämlich Dichtheit, kompakte Bauform, vandalensichere Ausführung, nur mit Werkzeug zu öffnen, hohe Belastbarkeit, auf diese Klappdeckelvorrichtung übertragen.

Weitere Vorteile und Merkmale der Erfindung ergeben sich aus der nachfolgenden Beschreibung eines Ausführungsbeispiels der Erfindung, das anhand der Zeichnung dargestellt ist. Die Zeichnung zeigt in
- Fig. 1: eine perspektivische Ansicht des Deckels und des Gerätebecherträgers einer erfindungsgemäßen Klappdeckelvorrichtung,
- Fig. 2: die perspektivische Ansicht der Klappdeckelvorrichtung gemäß Fig. 1 mit Leitungsauslass,
- Fig. 3: einen Ausschnitt der geschlossenen Klappdeckelvorrichtung gemäß Fig. 2,
- Fig. 3a: eine Draufsicht auf das Mehrgelenkscharnier,
- Fig. 4: einen Ausschnitt der Klappdeckelvorrichtung gemäß Fig. 2 mit angehobenem Deckel,
- Fig. 5: einen Ausschnitt der Klappdeckelvorrichtung gemäß Fig. 2 mit geöffnetem Deckel

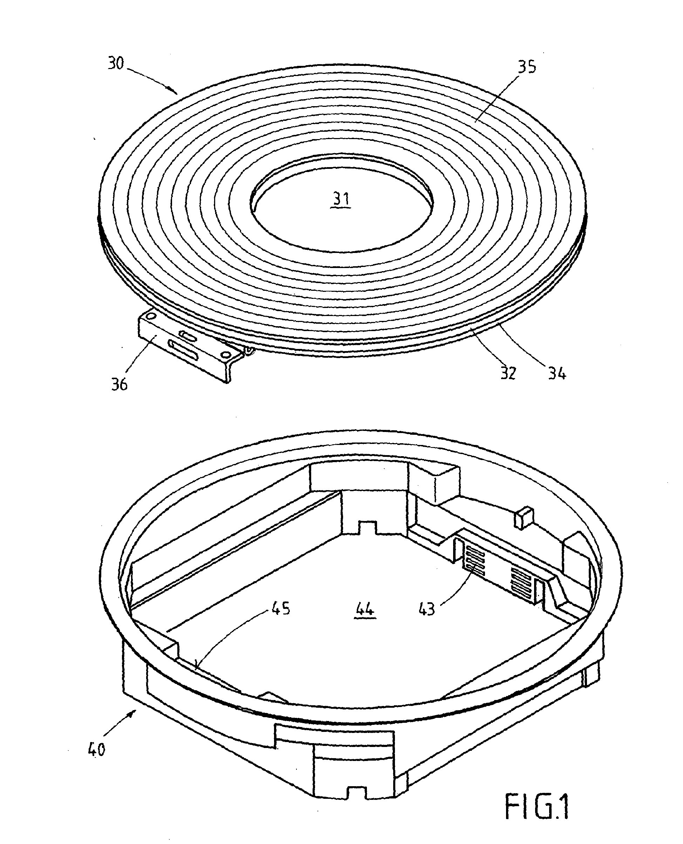

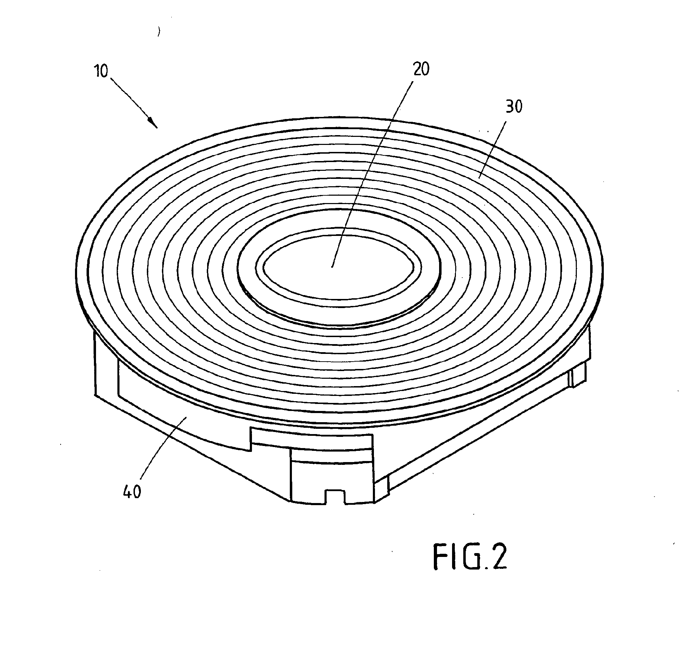

Fig. 2 zeigt eine erfindungsgemäße Klappdeckelvorrichtung 10 für nass gepflegte Böden. Diese besteht aus dem Gerätebecherträger 40, in dessen Innenraum 44, wie das aus Fig. 1 zu ersehen ist, Raum für Gerätebecher mit entsprechenden Leitungsanschlüssen ist. Der Innenraum 44 des Gerätebecherträgers 40 wird nach oben durch den Deckel 30 verschlossen. Bei diesem Ausführungsbeispiel ist eine Einbauöffnung 31 für den Leitungsauslass 20 mittig im Deckel 30 vorgesehen. Der Deckel 30 in Fig. 1 besteht aus einer Metallplatte 34 mit aufgeklebtem Belag 35, in diesem Fall einer Metallzierplatte mit einem Muster aus konzentrischen Kreisen. Dieses Muster wird durch den vorgesehenen Klappmechanismus, nämlich das Mehrgelenkscharnier 36, welches an der Unterseite der Metallplatte 34 angebracht ist, nicht gestört. Die Klappdeckelvorrichtung 10 gemäß Fig. 2 hat damit ein einheitliches formschönes Erscheinungsbild.

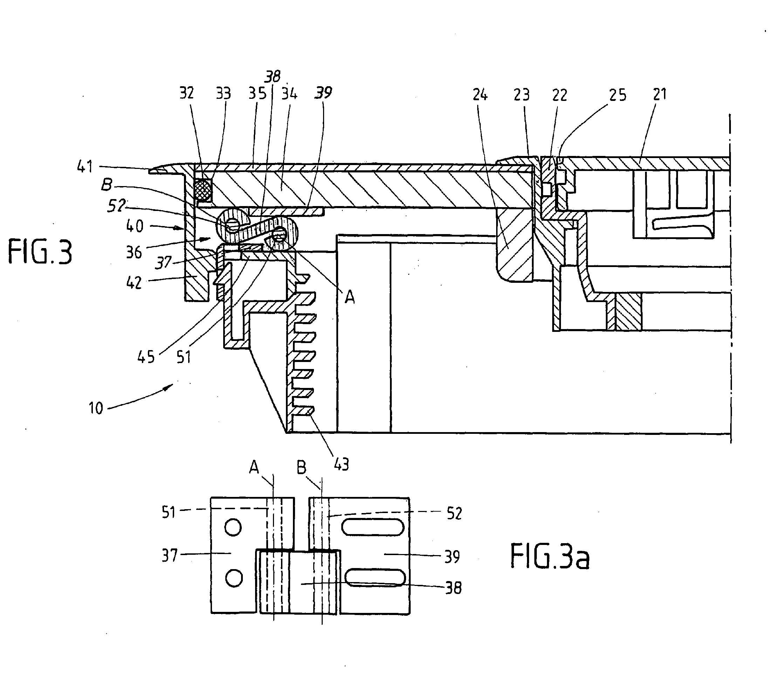

Das Mehrgelenkscharnier 36 wird also einerseits an der Unterseite der Metallplatte 34 angebracht und andererseits am Rahmen 42 des Gerätebecherträgers 40 an der vorgesehenen Scharnierauflage 45 festgelegt. Der Aufbau des Mehrgelenk-scharniers 36 ist besser aus den Fig. 3a zu ersehen. Es ist hier - der besseren Übersicht halber - in einer auseinandergeklappten Darstellung gezeigt. Auf das Mehrgelenkscharnier 36 wird nachfolgend bei der Beschreibung des Öffnungsvorganges des Deckels 30 eingegangen, der in den Fig. 3 bis Fig. 5 dargestellt ist.

In der Fig. 3 ist der Deckel 30 in geschlossener Position gezeigt, d.h. die Oberfläche des Deckels 30, in diesem Fall des Belags 35, befindet sich in gleicher Höhe wie der Auflagesteg 41 des Gerätebecherträgers 40, der den oberen Abschluss des Gerätebecherträgers 40 darstellt. Der Deckel 30 besitzt randseitig in der Metallplatte 34 eine umlaufende Nut 33 in der ein Dichtungselement 32 in diesem Ausführungsbeispiel ein umlaufender Dichtungsring aus einem Vollprofil aus elastischem Werkstoff einer Shorehärte von 30 eingelegt ist und zwar so eingelegt ist, dass das Dichtungselement 32 unter Federspannung in der Nut 33 gehalten wird. Mittig in der Metallplatte 34, nämlich in der Einbauöffnung 31, ist ein Leitungsauslass 20 angeordnet. Dieser umfasst ein Tubuselement 22, das nach oben durch eine Abdeckung 21, hier in Form eines Blinddeckels, verschlossen ist. Die Festlegung des Tubuselementes 22 in der Einbauöffnung 31 erfolgt durch einen oberen Befestigungsring 23 und einen von unten angesetzten unteren Befestigungsring 24. Diese Ringe 23 und 24 sind über eine Schraubverbindung miteinander verbunden. Bei diesem Leitungsauslass 20 handelt es sich um einen Leitungsauslass des Standes der Technik, der in einfacher Weise Zugang zu den im Innenraum 44 des Gerätebecherträgers 40 angeordneten Leitungsanschlüssen ermöglicht. Hierzu wird mittels eines Werkzeuges die Abdeckung 21 herausgehoben. Zur Unterstützung kann in der Abdeckung 21 eine kleine Kerbe 25 für das Werkzeug vorgesehen sein. Nach Abheben des Deckels kann das Tubuselement 22 herausgenommen werden und in umgedrehter Anordnung, d.h. mit dem größten Durchmesser nach unten, wieder im oberen Befestigungsring 23 durch Drehung festgelegt werden. Diese Anordnung ist sehr kompakt und sowohl in geöffneter als auch geschlossener Form des Leitungsauslasses 20 dicht. Dafür sind entsprechende Dichtungen zwischen den Bauteilen des Leitungsauslasses 20 vorgesehen, die in Fig. 3 nicht dargestellt wurden. Durch Entfernung der Abdeckung 21 kann der Deckel 30 gegriffen und bewegt werden, ohne dass dafür ein zusätzliches Handgriffelement am Deckel 30 vorgesehen werden muss.

Die Bewegung des Deckels 30 erfolgt in der vom Mehrgelenkscharnier 36 vorgesehenen Bewegungsrichtung. Dieses Mehrgelenkscharnier 36 besteht aus einem Scharnierteil 37, welches am Gerätebecherträger 40 festgelegt ist. In diesem Fall ist das Scharnierteil 37 aus einem Eckwinkel mit angeformtem Scharnierauge geformt. Der Eckwinkel greift in eine Ausnehmung am Rahmen 42 des Gerätebecherträgers 40 ein und liegt auf einer Scharnierauflage 45 auf. Zusätzlich kann eine Befestigung mittels einer Schraubverbindung zur Festlegung an der Scharnierauflage 45 erfolgen. Hierzu können die in Fig. 3a gezeigten Bohrungen verwendet werden. Das Scharnierteil 37 ist mit dem mittleren Scharnierelement 38 über einen Scharnierstift 51 verbunden. So verbindet der Scharnierstift 51 ein Scharnierauge des mittleren Scharnierelementes 38 und das Scharnierauge des Scharnierteiles 37. Der Scharnierstift 51 ermöglicht eine Bewegung des Scharnierelementes 38 um die Drehachse A. Das im Querschnitt S-förmig gestaltete Scharnierelement 38 besitzt am zum ersten Scharnierauges gegenüberliegenden Ende ein weiteres Scharnierauge, in welchem ein Scharnierstift 52 steckt, der das mittlere Scharnierelement 38 gelenkig mit dem Scharnierteil 39 verbindet. Dieses Scharnierteil 39 besteht aus einer an der Unterseite der Metallplatte 34 festgelegten Scharnierplatte ebenfalls mit angeformtem Scharnierauge. Der Scharnierstift 52 ermöglicht eine Bewegung um die Drehachse B.

Wird nun durch Herauslösen der Abdeckung 21 des Leitungsauslasses 20 ein Fassen des Deckels 30 möglich, so wird als erstes durch Ziehen am Deckel 30 eine senkrechte Hubbewegung ausgelöst. Hierbei bewegt sich das mittlere Scharnierelement 38 um die Drehachse A, d.h. der die beiden Scharnieraugen des mittleren Scharnierelementes 38 verbindende Steg richtet sich auf. Sobald dieser Steg eine im wesentlichen senkrechte Ausrichtung hat, ist die Hubbewegung beendet. Um zu garantieren, dass nach Beendigung des Hubes der Deckel 30 ausreichend weit außerhalb des Gerätebecherträgers 40 positioniert ist, muss die Länge des Steges des mittleren Scharnierelementes 38 bzw. der Abstand der Scharnieraugen des mittleren Scharnierelementes 38 bzw. der Abstand der Drehachsen A, B mindestens so groß sein, dass ein solcher Hub gewährleistet ist. Dies bedeutet, abhängig von der Dicke des Deckels muss der Abstand der Drehachsen A, B gewählt werden.

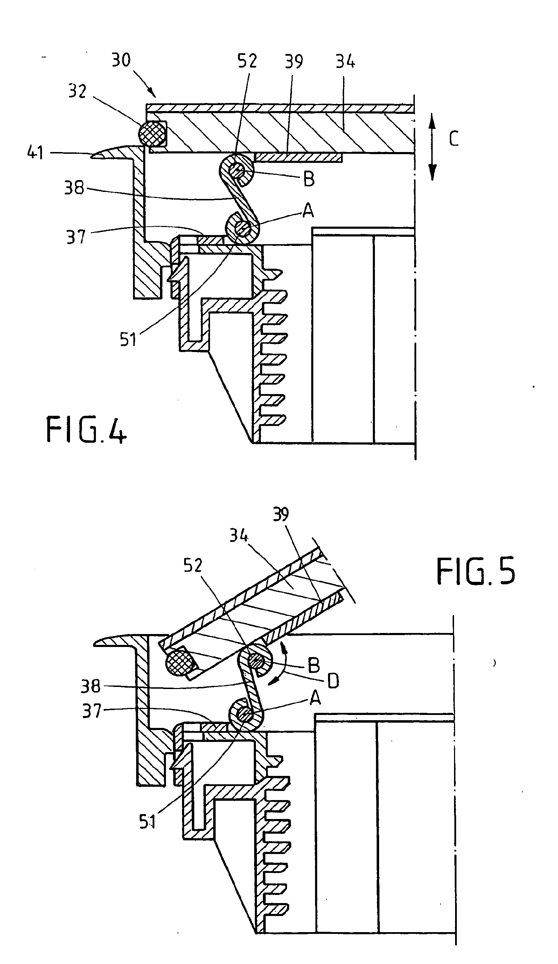

In der Fig. 4 ist der Deckel 30 in angehobener Position gezeigt. Der Deckel 30 kann beim Schließen des Deckels 30 in gleicher Weise wieder abgesenkt werden. Die Richtung der Hub- bzw. Absenkbewegung ist durch den Pfeil C in der Fig. 4 dargestellt. Wie weiterhin deutlich aus Fig. 4 zu ersehen, befindet sich in der angehobenen Position des Deckels 30 das Dichtungselement 32 außerhalb des Gerätebecherträgers 40, in diesem Fall oberhalb des Auflagesteges 41, der den oberen Abschluss des Gerätebecherträgers 40 darstellt. Sollten also geringe Mengen Feuchtigkeit in den Spalt zwischen Gerätebecherträger 40 und Deckel 30 oberhalb des Dichtungselementes bei geschlossener Position gewesen sein, so wurde diese geringe Feuchtigkeitsmenge durch das Dichtungselement 32 aus dem Spalt nach außen getragen. In angehobener Position befindet sich damit sämtliche Feuchtigkeit außerhalb des Gerätebecherträgers 40, da das Dichtungselement 32 umfangseitig um den Deckel 30 herum, an jeder Stelle des Spaltes in gleicher Weise gewirkt hat.

Nach dem nun sämtliche mögliche Feuchtigkeit sich außerhalb des Gerätebecherträgers 40 befindet, erfolgt der zweite Bewegungsschritt zum Öffnen des Deckels 30, nämlich das bekannte Abklappen des Deckels 30, eine Schwenkbewegung um die Drehachse B. In der Fig. 5 ist diese Schwenkbewegung durch einen eingezeichneten Pfeil D dargestellt. Um den Deckel 30 in der ausgeschwenkten Stellung zu halten, kann zusätzlich eine Aufstellfeder vorgesehen werden. In der geöffneten Position des Deckels 30 sind nun die gewünschten Installationen von Anschlüssen im Innenraum 44 oder das Einsetzen/Entfernen von Gerätebechern in/aus dem Innenraum 44 des Gerätebecherträgers 40 möglich. Zur Installation eines Gerätebechers ist an gegenüberliegenden Seiten des Rahmens 42 des Gerätebecherträgers 40 je ein Rastleiter 43 vorgesehen. Diese Rastleiter 43 ermöglichen es einen Gerätebecher in gewünschter Höhe festzulegen.

Zum Schließen der Klappdeckelvorrichtung 10 wird der Deckel 30 in gleicher Weise durch Schwenkbewegung D um die Achse B und Absenkbewegung C um die Drehachse A bewegt, bis der Deckel 30 vollständig innerhalb des Gerätebecherträgers 40 angeordnet ist und der obere Belag 35 des Deckels 30 mit dem Auflagesteg 41 des Gerätebecherträgers 40 fluchtet.

Die Erfindung ist nicht auf die Merkmale des Ausführungsbeispieles beschränkt. Es sind vielmehr weitere Ausgestaltungen denkbar, so muss der Deckel 30 bzw. die Metallplatte 34 keine runde Form besitzen. In gleicherweise muss der Leitungsauslass 20 in der Metallplatte 34 nicht mittig vorgesehen sein und die entsprechende Einbauöffnung 31 in der Metallplatte 34 keine runde Form besitzen, sondern kann auch bedarfsweise, wenn entsprechend Leitungsauslässe vorhanden sind, von der runden Form abweichen, nämlich eine quadratische, rechteckige oder ovale Form besitzen. Das mittlere Scharnierelement 38 muss keinen S-förmigen Querschnitt aufweisen. Dies ist fertigungstechnisch eine einfache Form. Es ist jedoch auch möglich die Scharnieraugen des mittleren Scharnierelementes 38 in anderer Weise als über einen Steg miteinander zu verbinden. Das Mehrgelenkscharnier 36 kann des weiteren auch durch andere Scharnierteile realisiert werden, beispielsweise könnten die am Gerätebecherträger 40 bzw. dem Deckel 30 angeordneten Scharnierteile 37, 39 bereits mit einem angeformten Scharnierstift 51, 52 versehen sein, d.h. auf separate Scharnierstifte 51, 52 verzichtet werden.

In jedem Fall garantiert die erfindungsgemäße Klappdeckelvorrichtung für nass gepflegte Böden einen Schutz des Innenraumes 44 des Gerätebecherträgers 40 vor eindringender Feuchtigkeit, ist leicht handhabbar, insbesondere störungssicher handhabbar und kann durch leichten Austausch der Dichtung leicht gewartet werden, was einen dauerhaften Einsatz der Klappdeckelvorrichtung sichert.

### Bezugszeichenliste:

- 10: Klappdeckel
- 20: Leitungsauslass
- 21: Abdeckung
- 22: Tubuselement
- 23: Obere Befestigungsring
- 24: Untere Befestigungsring
- 25: Kerbe
- 30: Deckel
- 31: Einbauöffnung
- 32: Dichtungselement
- 33: Nut
- 34: Metallplatte
- 35: Belag
- 36: Mehrgelenkscharnier
- 37: Scharnierteil
- 38: Scharnierelement
- 39: Scharnierteil
- 40: Gerätebecherträger
- 41: Auflagesteg
- 42: Rahmen
- 43: Rastleiter
- 44: Innenraum
- 45: Scharnierauflage
- 51: Scharnierstift
- 52: Scharnierstift
- A: Drehachse
- B: Drehachse
- C: Hubbewegung
- D: Schwenkbewegung

## Patentansprüche

1. Klappdeckelvorrichtung für feucht gepflegte Böden, welche aus einem Gerätebecherträger (40), einem verschließbaren Leitungsauslass (20) und einem am Gerätebecherträger (40) gelagerten Deckel (30) aufgebaut ist,
wobei im Bereich des Deckelrandes ein Dichtungselement (32) vorgesehen ist, welches in geöffneter Position des Deckels (30) den Umfang der Deckelfläche des Deckels (30) überragt und welches in geschlossener Position des Deckels (30) durch Anlage an der Innenseite des Gerätebecherträgers (40) ein Eindringen von Feuchtigkeit in den Innenraum (44) des Gerätebecherträgers (40) verhindert,
der Deckel (30) aus einer Metallplatte (34) aufgebaut ist und der Deckel (30) über ein Mehrgelenkscharnier (36) am Gerätebecherträger (40) bewegbar gelagert ist,
wobei die Öffnung des Deckels (30) mittels des Mehrgelenkscharniers (36) in zwei nachfolgenden Bewegungsschritten möglich ist, nämlich erstens in einer senkrechten Hubbewegung (C) des Deckels (30) durch Bewegung um eine erste Drehachse (A) des Mehrgelenkscharniers (36) und zweitens in einer anschließenden Schwenkbewegung (D) um eine zweite Drehachse (B) des Mehrgelenkscharniers (36),
wobei der Hub des Deckels (30) zumindest so groß bemessen ist, dass das Dichtungselement (32) in einen Bereich außerhalb des Gerätebecherträgers (40) verschiebbar ist.

2. Klappdeckelvorrichtung nach Anspruch 1, **dadurch gekennzeichnet, dass** an der Unterseite der Metallplatte (34) ein Scharnierteil (39) des Mehrgelenkscharniers (36) und ein weiteres Scharnierteil (37) des Mehrgelenkscharniers (36) an der Innenseite des Rahmens (42) des Gerätebecherträgers (40) angeordnet ist und diese Scharnierteile (37, 39) über ein weiteres Scharnierelement (38) gelenkig miteinander verbunden sind.

3. Klappdeckelvorrichtung nach Anspruch 2, **dadurch gekennzeichnet, dass** die Scharnierteile (37, 39) jeweils eine Scharnierplatte mit einem daran angeformten Scharnierauge umfassen und das Scharnierelement (38) an gegenüberliegenden Ende je ein Scharnierauge besitzt, wobei ein Scharnierauge des Scharnierelementes (38) über einen gemeinsamen Scharnierstift (51) um die Drehachse (A) drehbar mit dem Scharnierauge des Scharnierteils (37) und ein weiteres Scharnierauge des Scharnierelementes (38) über einen gemeinsamen Scharnierstift (52) um die Drehachse (B) drehbar mit dem Scharnierauge des Scharnierteils (39) verbunden ist.

4. Klappdeckelvorrichtung nach Anspruch 3, **dadurch gekennzeichnet, dass** das Scharnierelement (38) einen S-förmigen Querschnitt besitzt.

5. Klappdeckelvorrichtung nach einem der Ansprüche 1 bis 4, **dadurch gekennzeichnet**, die Metallplatte (34) mittig eine Einbauöffnung (31) für den Leitungsauslass (20) besitzt.

6. Klappdeckelvorrichtung nach Anspruch 5, **dadurch gekennzeichnet, dass** die Metallplatte (34) eine quadratische, runde oder rechteckige Einbauöffnung (31) für den Leitungsauslass (20), vorzugsweise eine runde Einbauöffnung (31), besitzt.

7. Klappdeckelvorrichtung nach Anspruch 6, **dadurch gekennzeichnet, dass** die Einbauöffnung (31) eine Ausstanzung der Metallplatte (34) darstellt.

8. Klappdeckelvorrichtung nach einem der Ansprüche 1 bis 7, **dadurch gekennzeichnet**, die Metallplatte (34) am äußeren Rand eine umlaufende Nut (33) für die Aufnahme des Dichtungselements (32) besitzt.

9. Klappdeckelvorrichtung nach Anspruch 8, **dadurch gekennzeichnet, dass** die Halterung des Dichtungselements (32) in der Nut (33) formschlüssig und / oder kraftschlüssig erfolgt, insbesondere durch ein Verkleben, Verklemmen oder mittels Federkraft.

10. Klappdeckelvorrichtung nach Anspruch 8 oder 9, **dadurch gekennzeichnet, dass** das Dichtungselement (32) ein umlaufender Ring aus einem elastischen Werkstoff ist, welcher eine Shorehärte von 10 bis 40, vorzugsweise eine Shorehärte von 30, aufweist.

11. Klappdeckelvorrichtung nach einem der Ansprüche 1 bis 10, **dadurch gekennzeichnet**, das der Deckel (30) und die Metallplatte (34) eine runde oder eckige Form besitzen.

12. Klappdeckelvorrichtung nach einem der Ansprüche 1 bis 11 , **dadurch gekennzeichnet, dass** der Deckel (30) oberhalb der Metallplatte (34) mit einem Belag (35) versehen ist.

13. Klappdeckel nach Anspruch 1, **dadurch gekennzeichnet, dass** der Deckel (30) aus einer dünnen Metallplatte (34) besteht, so dass nur eine geringe Hubbewegung (C) notwendig ist.

## Claims

1. Flip lid device for wet-maintained floors, which is constructed from an appliance container carrier (40), a closable line outlet (20) and a lid (30) seated on an appliance container carrier (40),
with a sealing element (32) being provided in the area of the lid edge, with the sealing element (32) extending beyond the extent of the surface of the lid (30) with the lid (30), open and which, when in the closed position of the lid (30) prevents the ingress of moisture into the inner space (44) of the appliance container carrier (40) by lying against the inside of the appliance container carrier (40),
with the lid (30) comprising a metal plate (34) and the lid (30) being movably mounted on the appliance container carrier (40) by means of a multilink hinge (36),
with it being possible to open the lid (30) in two successive movement steps by means of the multilink hinge (36), i.e. firstly in a vertical lifting movement (C) of the lid (30), by rotating about a first rotary axis (A) of the multilink hinge (36) and secondly in a following swiveling movement (D) about a second rotary axis (B) of the multilink hinge (36),
with the lift of the lid (30) being designed to be at least sufficient to move the sealing element (32) to an area outside the appliance container carrier (40).

2. Flip lid device according to Claim 1, **characterized in that** a hinge part (39) of the multilink hinge (36) is arranged on the underside of the metal plate (34) and a further hinge part (37) of the multilink hinge (36) is arranged on the inside of the frame (42) of the appliance container carrier (40) and these hinge parts (37, 39) are hinge connected to each other by a further hinge element (38).

3. Flip lid device according to Claim 2, **characterized in that** the hinge parts (37, 39) each have a hinge plate with an integral hinge eye and the hinge element (38) has a hinge eye on each opposite end, with a hinge eye of the hinge element (38) being rotatable on a common hinge pin (51) about the rotary axis (A) with the hinge eye of the hinge part (37) and a further hinge eye of the hinge element (38) being connected to the hinge eye of the hinge part (39) by a common hinge pin (52) so that it can rotate about the rotary axis (B).

4. Flip lid device according to Claim 3, **characterized in that** the hinge element (38) has an S-shaped cross section.

5. Flip lid device according to one of Claims 1 to 4, **characterized in that** the metal plate (34) has an opening (31) in the centre for the line outlet (20).

6. Flip lid device according to Claim 5, **characterized in that** the metal plate (34) has a square, round or rectangular opening (31), preferably round, opening (31) for the line outlet (20).

7. Flip lid device according to Claim 6, **characterized in that** the opening (31) is punched out of the metal plate (34).

8. Flip lid device according to one of Claims 1 to 7, **characterized in that** the metal plate (34) has a circumferential groove (33) on its outer edge to accommodate the sealing element (32).

9. Flip lid device according to Claim 8, **characterized in that** the retention of the sealing element (32) in the groove (33) is by means of a form fit and/or force fit, achieved by bonding, clamping or by spring force.

10. Flip lid device according to Claim 8 or 9,
**characterized in that** the sealing element (32) is a circumferential ring consisting of a resilient material which has a Shore-hardness of 10 to 40, preferably a Shore hardness of 30.

11. Flip lid device according to one of Claim 1 to 10, **characterized in that** the lid (30) and the metal plate (34) have a round or square shape.

12. Flip lid device according to one of claims 1 to 11, **characterized in that** the lid (30) is provided with a cover (35) on top of the metal plate (34).

13. Flip lid device according to Claim 1, **characterized in that** the lid (30) consists of a thin metal plate (34) so that only a slight lifting movement (C) is necessary.

## Revendications

1. Dispositif à couvercle rabattable pour sols entretenus humides, construit à partir d'un support (40) de boîtier d'appareil, d'un orifice (20) obturable pour sortie de conduite et d'un couvercle (30) en appui sur le support (40) de boîtier d'appareil,
un joint d'étanchéité (32) étant prévu dans la zone du bord du couvercle, lequel joint dépasse la circonférence de la surface du couvercle (30) lorsque ce dernier (30) se trouve en position ouverte, et qui lorsque le couvercle (30) se trouve en position fermée empêche, par application contre le côté intérieur du support (40) de boîtier d'appareil, l'humidité de pénétrer dans le compartiment intérieur (44) du support (40) de boîtier d'appareil,
le couvercle (30) étant construit à partir d'une plaque métallique (34) et le couvercle (30) étant en appui mobile via une charnière (36) à plusieurs articulations contre le support (40) du boîtier d'appareil,
l'ouverture du couvercle (30) au moyen de la charnière (36) à plusieurs articulations étant possible en deux étapes successives du mouvement, à savoir premièrement par un mouvement de levage vertical (C) décrit par le couvercle (30) se déplaçant autour d'un premier axe de rotation (A) de la charnière (36) à plusieurs articulations, et deuxièmement par un mouvement consécutif de pivotement (D) autour d'un deuxième axe de rotation (B) de la charnière (36) à plusieurs articulations,
la course de levage du couvercle (30) étant dimensionnée au moins suffisamment importante pour que le joint d'étanchéité (32) soit déplaçable dans une zone située hors du support (40) de boîtier d'appareil.

2. Dispositif à couvercle rabattable selon la revendication 1, **caractérisé en ce que** sur la face inférieure de la plaque métallique (34) est agencée une pièce (39) de la charnière à plusieurs articulations (36) et une autre pièce (37) de la charnière à plusieurs articulations (36) contre le côté intérieur du cadre (42) du support (40) de boîtier d'appareil, et **en ce que** ces pièces charnières (37, 39) sont reliées de façon articulée entre elles via un autre charnière (38) supplémentaire.

3. Dispositif à couvercle rabattable selon la revendication 2, **caractérisé en ce que** les pièces (37, 39) de charnière comprennent chacune une plaque de charnière avec un oeillet de charnière formé contre elle, et **en ce que** l'élément charnière (38) possède sur l'extrémité opposée respectivement un oeillet de charnière, sachant qu'un oeillet de l'élément charnière (38) peut tourner avec l'oeillet de la pièce charnière (37) autour de l'axe (A) via une tige (51) conjointe de charnière, et qu'un autre oeillet de l'élément charnière (38) est relié, tout en pouvant tourner autour de l'axe (B) via une tige (52) conjointe de charnière, à l'oeillet de la pièce charnière (39).

4. Dispositif à couvercle rabattable selon la revendication 3, **caractérisé en ce que** l'élément charnière (38) présente une section en forme de S.

5. Dispositif à couvercle rabattable selon l'une des revendications 1 à 4, **caractérisé en ce que** la plaque métallique (34) comporte au milieu un orifice d'incorporation (31) permettant la sortie (20) de conduite.

6. Dispositif à couvercle rabattable selon la revendication 5, **caractérisé en ce que** la plaque métallique (34) présente un orifice d'incorporation (31) carré, rond ou rectangulaire affecté à la sortie (20) de conduite, de préférence un orifice d'incorporation (31) rond.

7. Dispositif à couvercle rabattable selon la revendication 6, **caractérisé en ce que** l'orifice d'incorporation (31) résulte d'un découpage de la plaque métallique (34) à l'emporte-pièce.

8. Dispositif à couvercle rabattable selon l'une des revendications 1 à 7, **caractérisé en ce que** la plaque métallique (34) comporte sur le bord extérieur une rainure périmétrique (33) servant à recevoir le joint d'étanchéité (32).

9. Dispositif à couvercle rabattable selon la revendication 8, **caractérisé en ce que** la fixation du joint d'étanchéité (32) dans la rainure (33) a lieu par adhérence de formes / et ou adhérence de forces, en particulier par collage, bridage ou au moyen d'une force ressort.

10. Dispositif à couvercle rabattable selon la revendication 8 ou 9, **caractérisé en ce que** le joint d'étanchéité (32) est une bague périmétrique réalisée en un matériau élastique présentant une dureté Shore comprise entre 10 et 40, de préférence une dureté Shore de 30.

11. Dispositif à couvercle rabattable selon l'une des revendications 1 à 10, **caractérisé en ce que** le couvercle (30) et la plaque métallique (34) possèdent une forme ronde ou angulaire.

12. Dispositif à couvercle rabattable selon l'une des revendications 1 à 11, **caractérisé en ce que** le couvercle (30) au dessus de la plaque métallique (34) est doté d'un revêtement (35).

13. Dispositif à couvercle rabattable selon la revendication 1, **caractérisé en ce que** le couvercle (30) se compose d'une plaque métallique mince (34), de sorte qu'il ne faut qu'un court mouvement de levage (C).
